# EUROPEAN PATENT APPLICATION

(11) **EP 4 117 078 A1**
(43) Date of publication of application: **11.01.2023**
(21) Application number: 21923593.4
(22) Date of filing: 12.05.2021
(51) Int. Cl.: H01M 10/0587, H01M 10/0525, H01M 4/13

(54) **ELECTRODE ASSEMBLY, BATTERY CELL, BATTERY, AND ELECTRICAL DEVICE**

(71) Applicant: Contemporary Amperex Technology Co., Limited, Fujian 352100 (CN)
(72) Inventor: XU, Hu, Ningde Fujian 352100 (CN); JIN, Haizu, Ningde Fujian 352100 (CN)
(74) Representative: Rowlands, Stuart Michael
(86) International application number: PCT/CN2021/093351
(87) International publication number: WO 2022/236736

(57) **Abstract**

Embodiments of the application provide an electrode assembly, a battery cell, a battery and an electric device. The electrode assembly in the embodiments of the application includes a positive pole piece and a negative pole piece, the positive pole piece and the negative pole piece are wound in a winding direction to form a winding structure including a bent region. The positive pole piece and the negative pole piece each includes a plurality of bent portions located in the bent region, at least one of the bent portions in the positive pole piece is a first bent portion and at least one of the bent portions in the negative pole piece is a second bent portion adjacent to the first bent portion. The electrode assembly is provided with a first barrier, at least part of the first barrier is located between the first bent portion and the second bent portion, and the first barrier is configured to block at least part of ions deintercalated from the first bent portion from being intercalated into the second bent portion. In a first direction, at least one end of the first barrier goes beyond the first bent portion and the second bent portion, and the first direction is perpendicular to the winding direction. The application can improve the safety performance of the battery cell.

## Description

### TECHNICAL FIELD

The application relates to the technical field of batteries, and in particular to an electrode assembly, a manufacturing method and a manufacturing system therefor, a battery cell, a battery and an electric device.

### BACKGROUND ART

Battery cells are widely used in electronic devices such as mobile phones, laptops, battery cars, electric vehicles, electric aircrafts, electric boats, electric toy cars, electric toy boats, electric toy planes, electric tools, etc. Battery cells can include nickel-cadmium battery cells, nickel-hydrogen battery cells, lithium ion battery cells and secondary alkaline zinc-manganese battery cells.

In the development of battery technology, safety is also an issue that cannot be ignored in addition to improving the performance of battery cells. If the safety of battery cells cannot be guaranteed, the battery cells cannot be used. Therefore, how to improve the safety of battery cells is an urgent technical issue to be solved in battery technology.

### SUMMARY OF THE INVENTION

The application provides an electrode assembly, a manufacturing method and a manufacturing system therefor, a battery cell, a battery and an electric device, which can improve the safety of the battery cell.

In a first aspect, an embodiment of the application provides an electrode assembly including a positive pole piece and a negative pole piece, the positive pole piece and the negative pole piece are wound in a winding direction to form a winding structure including a bent region. The positive pole piece and the negative pole piece each includes a plurality of bent portions located in the bent region, at least one of the bent portions in the positive pole piece is a first bent portion and at least one of the bent portions in the negative pole piece is a second bent portion adjacent to the first bent portion. The electrode assembly is provided with a first barrier, at least part of the first barrier is located between the first bent portion and the second bent portion, and the first barrier is configured to block at least part of ions deintercalated from the first bent portion from being intercalated into the second bent portion. In a first direction, at least one end of the first barrier goes beyond the first bent portion and the second bent portion, and the first direction is perpendicular to the winding direction.

In the above solution, lithium plating can be effectively reduced by arranging the first barrier between the first bent portion and the second bent portion. During charging, at least part of ions deintercalated from a positive active material layer of the first bent portion are blocked by the first barrier, such that ions blocked by the first barrier cannot be intercalated into a negative active material layer of the second bent portion, which reduces the occurrence of lithium plating when the negative active material sheds from the second bent portion. A part, going beyond the first bent portion and the second bent portion, of the first barrier can act as a support, which can effectively reduce vibration amplitude of the first bent portion and the second bent portion, reduce impact force on the first bent portion and the second bent portion, and reduce shedding of active materials, thereby reducing the occurrence of lithium plating and improving the safety performance of the battery cell.

In some embodiments, the first barrier is attached to the first bent portion. The first barrier may be attached to a surface of the first bent portion by means of adhesion.

In some embodiments, the first barrier includes a first base layer and a first adhesive layer, the first adhesive layer is disposed on a surface, facing the first bent portion, of the first base layer. The first base layer includes a first body portion and a first supporting portion connected to the first body portion, the first adhesive layer is configured to bond at least part of the first body portion to the first bent portion, and the first supporting portion protrudes from the first bent portion in the first direction. The first body portion is configured to block at least part of ions deintercalated from the positive active material layer of the first bent portion, thereby reducing the occurrence of lithium plating. The first supporting portion acts as a support, which can effectively reduce vibration amplitude of the first bent portion and the second bent portion, reduce impact force on the first bent portion and the second bent portion, and reduce shedding of active materials, thereby reducing the occurrence of lithium plating and improving the safety performance of the battery cell.

In some embodiments, at least part of a surface, facing the first bent portion, of the first supporting portion is not provided with the first adhesive layer. The first supporting portion protrudes from the first bent portion and does not need to be bonded to the first bent portion, such that the first adhesive layer on the surface of the first supporting portion can be omitted, which can save materials and improve energy density.

In some embodiments, the first barrier is attached to two surfaces of the first bent portion, the first body portions of the two first barriers are arranged at both sides of the first bent portion respectively, and the first supporting portions of the two first barriers are not provided with the first adhesive layer.

In some embodiments, at least part of a surface, facing the first bent portion, of the first supporting portion is provided with the first adhesive layer.

In some embodiments, the first barrier is attached to two surfaces of the first bent portion, the first body portions of the two first barriers are arranged at both sides of the first bent portion respectively, and the first supporting portions of the two first barriers are connected by the first adhesive layer. The first supporting portions of the two first barriers are connected by the first adhesive layer, such that the two first barriers adhere to each other, thereby reducing the risk that the first barriers shed from the first bent portion, and improving the reliability of the first barriers during the service life of the battery cell.

In some embodiments, in the first direction, both ends of the first barrier go beyond the first bent portion. Both ends of the first barrier in the first direction can act as supports, thereby reducing vibration amplitude of the first bent portion, reducing impact force on the first bent portion, and reducing shedding of active materials.

In some embodiments, in the first direction, both ends of the first barrier go beyond the second bent portion. Both ends of the first barrier in the first direction can act as supports, thereby reducing vibration amplitude of the second bent portion, reducing impact force on the second bent portion, and reducing shedding of active materials.

In some embodiments, the electrode assembly is further provided with a second barrier, at least part of the second barrier is located between the first bent portion and the second bent portion. The first barrier and the second barrier are spaced in the first direction, with one end, away from the second barrier, of the first barrier going beyond one end of the first bent portion, and one end, away from the first barrier, of the second barrier going beyond the other end of the first bent portion.

In some embodiments, the electrode assembly further includes a separator for separating the first pole piece from the second pole piece, in the first direction, both ends of the separator go beyond the first bent portion and the second bent portion. The separator can separate the first bent portion from the second bent portion, thereby reducing the risk of electrically connecting the first bent portion with the second bent portion.

In some embodiments, the porosity of the first barrier is lower than that of the separator, making the first barrier more effective in blocking the passage of lithium ions.

In some embodiments, the hardness of the first barrier is higher than that of the separator. With a relatively high hardness, the first barrier can withstand a large impact force, and reduce deformation of the first barrier under an impact force, thereby effectively reducing vibration amplitude of the first bent portion and the second bent portion, reducing the impact force on the first bent portion and the second bent portion, and reducing shedding of active materials.

In some embodiments, in the first direction, both ends of the separator go beyond the first barrier. In this way, the first barrier will not increase the maximum size of the electrode assembly in the first direction, improving the energy density of the electrode assembly.

In some embodiments, the first barrier is attached to a surface of the separator.

In some embodiments, the winding structure further includes a straight region connected to the bent region. Both ends of the first barrier in the winding direction are located in the bent region; or one end of the first barrier in the winding direction is located in the bent region, and the other end of the first barrier in the winding direction is located in the straight region; or both ends of the first barrier in the winding direction are located in the straight region.

In some embodiments, the positive pole piece further includes a first straight portion located in the straight region and a positive tab connected to the first straight portion, the first straight portion is connected to the first bent portion, and the positive tab is connected to one end of the first straight portion in the first direction. In the first direction, one end, near the positive tab, of the first barrier goes beyond the first bent portion and the second bent portion. The first barrier can reduce vibration amplitude of the electrode assembly on the positive tab side, thereby reducing the risk of tearing the positive tab.

In some embodiments, at least one of the innermost bent portions of the positive pole piece is the first bent portion, and at least one of the innermost bent portions of the negative pole piece is the second bent portion. The first barrier is arranged between the two innermost bent portions of the bent region, such that lithium plating between the two innermost bent portions of the bent region can be reduced, thereby improving the safety performance.

In a second aspect, an embodiment of the application provides a battery cell, including a case and the electrode assembly according to any one of the embodiments of the first aspect, the electrode assembly is accommodated in the case.

In a third aspect, an embodiment of the application provides a battery, including a box and the battery cell in the second aspect, the battery cell is accommodated in the box.

In a fourth aspect, an embodiment of the application provides an electric device, including the battery in the third aspect, the battery is configured to provide electrical energy.

In a fifth aspect, an embodiment of the application provides a method for manufacturing an electrode assembly, including: providing a positive pole piece, a negative pole piece and a first barrier; and winding the positive pole piece and the negative pole piece in a winding direction to form a winding structure. The winding structure includes a bent region. The positive pole piece and the negative pole piece each includes a plurality of bent portions located in the bent region, at least one of the bent portions in the positive pole piece is a first bent portion and at least one of the bent portions in the negative pole piece is a second bent portion adjacent to the first bent portion. At least part of the first barrier is located between the first bent portion and the second bent portion, and the first barrier is configured to block at least part of ions deintercalated from the first bent portion from being intercalated into the second bent portion. In a first direction, at least one end of the first barrier goes beyond the first bent portion and the second bent portion, and the first direction is perpendicular to the winding direction.

In a sixth aspect, an embodiment of the application provides a system for manufacturing an electrode assembly, including: a first supply device, configured to supply a positive pole piece; a second supply device, configured to supply a negative pole piece; a third supply device, configured to supply a first barrier; and an assembly device, configured to wind the positive pole piece and the negative pole piece in a winding direction to form a winding structure. The winding structure includes a bent region. The positive pole piece and the negative pole piece each includes a plurality of bent portions located in the bent region, at least one of the bent portions in the positive pole piece is a first bent portion and at least one of the bent portions in the negative pole piece is a second bent portion adjacent to the first bent portion. At least part of the first barrier is located between the first bent portion and the second bent portion, and the first barrier is configured to block at least part of ions deintercalated from the first bent portion from being intercalated into the second bent portion. In a first direction, at least one end of the first barrier goes beyond the first bent portion and the second bent portion, and the first direction is perpendicular to the winding direction.

### BRIEF DESCRIPTION OF THE DRAWINGS

In order to describe the technical solutions in the embodiments of the application more clearly, the accompanying drawings required for describing the embodiments are briefly described below. Obviously, the accompanying drawings in the following description show merely some embodiments of the present disclosure, and a person of ordinary skill in the art would also be able to derive other accompanying drawings from these accompanying drawings without creative efforts.
Fig. 1 is a structural schematic diagram of a vehicle provided in some embodiments of the application;
Fig. 2 is an exploded view of a battery provided in some embodiments of the application;
Fig. 3 is a structural schematic diagram of a battery module shown in Fig. 2;
Fig. 4 is an exploded view of a battery cell provided in some embodiments of the application.
Fig. 5 is a schematic structural diagram of an electrode assembly provided in some embodiments of the application.
Fig. 6 is a schematic structural diagram of an electrode assembly provided in some other embodiments of the application.
Fig. 7 is a local structural diagram of an electrode assembly provided in some embodiments of the application.
Fig. 8 is a schematic sectional view of the electrode assembly shown in Fig. 7 taken along line D-D.
Fig. 9 is an enlarged view of the electrode assembly shown in Fig. 8 at the square frame F.
Fig. 10 is a schematic sectional view of the electrode assembly shown in Fig. 7 taken along line E-E.
Fig. 11 is a local structural diagram of a positive pole piece, in an unfolded state, of an electrode assembly provided in some embodiments of the application.
Fig. 12 is a local sectional view of an electrode assembly provided in some other embodiments of the application.
Fig. 13 is a local sectional view of an electrode assembly provided in some other embodiments of the application.
Fig. 14 is a local sectional view of an electrode assembly provided in some other embodiments of the application.
Fig. 15 is a local structural diagram of an electrode assembly provided in some other embodiments of the application.
Fig. 16 is a local structural diagram of an electrode assembly provided in some other embodiments of the application.
Fig. 17 is a local structural diagram of an electrode assembly provided in some other embodiments of the application.
Fig. 18 is a local structural diagram of an electrode assembly provided in some other embodiments of the application.
Fig. 19 is a schematic flow chart of a method for manufacturing an electrode assembly provided in some embodiments of the application.
Fig. 20 is a schematic block diagram of a system for manufacturing an electrode assembly provided in some embodiments of the application.

In the drawings, the components are not drawn to actual scale.

### SPECIFIC EMBODIMENTS

To make the objectives, technical solutions, and advantages of the embodiments of the application clearer, the following will clearly describes the technical solutions in the embodiments of the application with reference to the accompanying drawings in the embodiments of the application. The described embodiments are some rather than all of the embodiments of the application. Based on the embodiments of the application, all other embodiments obtained by those of ordinary skill in the art without making creative efforts fall within the scope of protection of the application.

Unless otherwise defined, all technical and scientific terms used in the application have the same meanings as those commonly understood by those who belong to the technical field of the present application. In the application, the terms used in the specification of the application are merely for the purpose of describing specific embodiments, and are not intended to limit the application. The terms "including" and "having" and any variations thereof in the specification and claims of the application and the above accompanying drawings are intended to cover non-exclusive inclusion. The terms "first", "second", etc. in the specification and claims of the application or the above accompanying drawings are used to distinguish different objects, but not to describe a specific order or primary and secondary relationship.

Reference to an "embodiment" in the application means that a specific feature, structure or characteristic described in conjunction with an embodiment may be included in at least one embodiment of the application. The appearance of this phrase in various places in the specification does not necessarily mean the same embodiment, nor is it an independent or alternative embodiment mutually exclusive with other embodiments.

In the description of the application, it should be noted that, unless otherwise explicitly specified and defined, the terms "mounting", "connecting", "connection" and "attachment" should be understood in a broad sense, for example, they may be a fixed connection, a detachable connection, or an integrated connection; and may be a direct connection, or an indirect connection via an intermediate medium, or communication inside two elements. For those of ordinary skill in the art, the specific meanings of the above terms in the application could be understood according to specific circumstances.

As used herein, the term "and/or" is merely used to describe an associated relationship between associated objects and means three relationships, for example, A and/or B may mean A alone, A and B together, and B alone. In addition, the character "/" in the application generally indicates that the associated objects are an "or" relationship.

In the embodiments of the application, the same reference numerals refer to same components, and for the sake of brevity, detailed descriptions of the same components are omitted in different embodiments. It should be understood that a thickness, a length, a width and other dimensions of various components and an overall thickness, length, width and other dimensions of an integrated device shown in the accompanying drawings in the embodiments of the application are merely exemplary, and should not constitute any limitation on the application.

The term "plurality" in the application means two or more.

In the application, battery cells may include a lithium ion secondary battery cell, a lithium ion primary battery cell, a lithium-sulfur battery, a sodium lithium-ion battery cell, a sodium ion battery cell, a magnesium ion battery cell, etc., which are not limited by the embodiments of the application. The battery cell may be in cylindrical, flat, cuboid or other shapes, which is not limited by the embodiments of the application. Generally, the battery cells are divided into three types according to packaging manners: cylindrical battery cells, square battery cells and pouch battery cells, which are not limited by the embodiments of the application.

The battery mentioned in the embodiments of the application refers to a single physical module which includes one or a plurality of battery cells and therefore provides a higher voltage and capacity. For example, the battery mentioned in the application may include a battery module or a battery pack, etc. Generally, the battery includes a box for packaging one or a plurality of battery cells. The box may prevent liquid or other foreign matter from affecting charging or discharging of the battery cell.

The battery cell includes an electrode assembly and an electrolyte, and the electrode assembly includes a positive pole piece, a negative pole piece and a separator. The battery cell works mainly depending on movement of metal ions between the positive pole piece and the negative pole piece. The positive pole piece includes a positive current collector and a positive active material layer coated on a surface of the positive current collector; the positive current collector includes a positive current collecting portion and a positive protrusion portion protruding from the positive current collecting portion, the positive current collecting portion is coated with the positive active material layer, at least part of the positive protrusion portion is not coated with the positive active material layer, and the positive protrusion portion serves as a positive tab. Taking a lithium ion battery as an example, the positive current collector may be made of aluminum, and the positive active material layer includes a positive active material which may be lithium cobaltate, lithium iron phosphate, ternary lithium or lithium manganate. The negative pole piece includes a negative current collector and a negative active material layer coated on a surface of the negative current collector; the negative current collector includes a negative current collecting portion and a negative protrusion portion protruding from the negative current collecting portion, the negative current collecting portion is coated with the negative active material layer, at least part of the negative protrusion portion is not coated with the negative active material layer, and the negative protrusion portion serves as a negative tab. The negative current collector may be made of copper, and the negative active material layer includes a negative active material which may be carbon or silicon. In order to guarantee fusing does not occur during large current flow, a plurality of positive tabs are stacked together, and a plurality of negative tabs are stacked together. The separator may be made of polypropylene (PP) or polyethylene (PE). In addition, the electrode assembly may be in a winding structure or a laminated structure, which is not limited in the embodiments of the application.

When a lithium ion battery cell is charged, lithium ions are deintercalated from a positive active material layer and intercalated into a negative active material layer, but some exceptions may occur, for example, there is not enough space for lithium to be intercalated into the negative active material layer, lithium ions are intercalated in the negative active material layer with excessive resistance or lithium ions are deintercalated from the positive active material layer too quickly, and deintercalated lithium ions cannot be intercalated into the negative active material layer of a negative pole piece in an equal amount. Lithium ions that cannot be intercalated into the negative pole piece can only get electrons on a surface of the negative pole piece, thus forming metallic lithium, which is called lithium plating. Lithium plating not only degrades the performance of the lithium ion battery cell and greatly shortens the cycle life, but also limits the fast charging capacity of the lithium ion battery cell. In addition, when lithium plating occurs to the lithium ion battery cell, precipitated lithium metal is very active and can react with an electrolyte at a low temperature, resulting in a decrease in initial heat generation temperature and an increase in heat generation rate of the battery cell, which seriously endangers the safety of the battery cell. Moreover, in the case of severe lithium plating, deintercalated lithium ions can form lithium crystals on a surface of the negative pole piece, and the lithium crystals can easily pierce a separator, triggering the risk of short circuit between adjacent positive and negative pole pieces.

In the research and development process, the inventor found that when the electrode assembly is vibrated or squeezed, the active material of the positive pole piece or the active material of the negative pole piece will shed, which is called dusting. The shedding of active materials, especially the shedding of the active material from the negative pole piece, may cause lithium intercalation sites of the negative active material layer of the negative pole piece to be less than the amount of lithium ions that can be supplied by the positive active material layer of the adjacent positive pole piece, therefore, the lithium ion battery cell is prone to lithium plating during charging.

In the research and development process, the inventor also found that a winding electrode assembly is more prone to lithium plating in a bent region thereof. After further research, the inventor found that the main reason for the lithium plating is that the positive pole piece and the negative pole piece located in the bent region need to be bent, while the positive active material layer and the negative active material layer are prone to stress concentration during bent and cause respective active materials to shed. The shedding of active materials, especially the shedding of the active material from the negative pole piece, may cause lithium intercalation potential of the negative active material layer of the negative pole piece to be less than the amount of lithium ions that can be supplied by the positive active material layer of the adjacent positive pole piece, thus triggering lithium plating.

In view of this, an embodiment of the application provides a technical solution, in which the electrode assembly includes a positive pole piece and a negative pole piece, the positive pole piece and the negative pole piece are wound in a winding direction to form a winding structure including a bent region. The positive pole piece and the negative pole piece each includes a plurality of bent portions located in the bent region, at least one of the bent portions in the positive pole piece is a first bent portion and at least one of the bent portions in the negative pole piece is a second bent portion adjacent to the first bent portion. The electrode assembly is provided with a first barrier, at least part of the first barrier is located between the first bent portion and the second bent portion, and the first barrier is configured to prevent at least some of the ions deintercalated from the first bent portion from being intercalated into the second bent portion. In a first direction, at least one end of the first barrier goes beyond the first bent portion and the second bent portion, and the first direction is perpendicular to the winding direction. A battery cell with such structure can reduce lithium plating and reduce the safety risk.

The technical solution described in the embodiment of the application is applicable to batteries and electric devices using the batteries.

The electric devices may be vehicles, mobile phones, portable devices, laptops, ships, spacecraft, electric toys and electric tools. The vehicles may be fuel vehicles, gas vehicles or new energy vehicles, and the new energy vehicles may be battery electric vehicles, hybrid electric vehicles, extended-range vehicles, etc. The spacecrafts include airplanes, rockets, space shuttles, spaceships, etc. The electric toys include fixed or mobile electric toys, such as game machines, electric car toys, electric ship toys and electric airplane toys. The electric tools include metal cutting electric tools, electric grinding tools, electric assembling tools and electric tools for railways, such as electric drills, electric grinders, electric wrenches, electric screwdrivers, electric hammers, impact electric drills, concrete vibrators, electric planers, etc. The embodiment of the application does not impose special restrictions on the above-mentioned electric devices.

For the sake of illustration, the following embodiments are illustrated with a vehicle as an electric device.

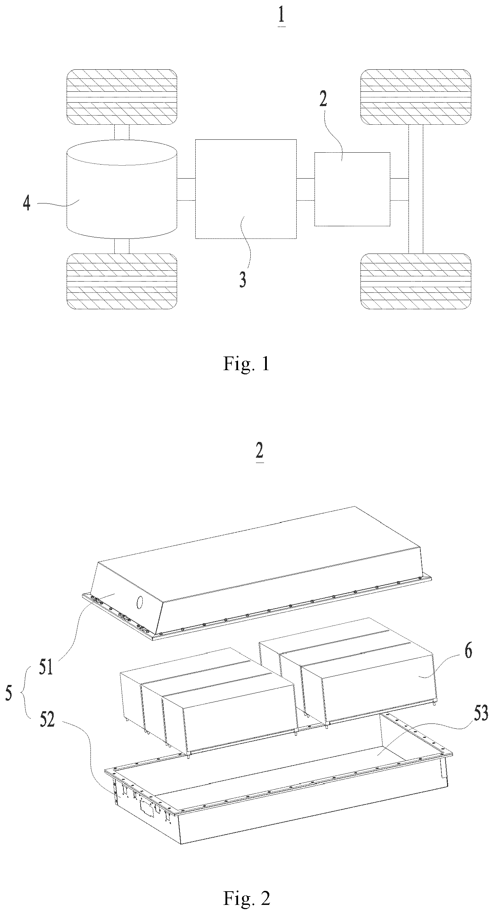

Fig. 1 is a schematic structural diagram of a vehicle provided in some embodiments of the application. As shown in Fig. 1, a battery 2 is disposed inside a vehicle 1, and the battery 2 may be disposed at the bottom, head or tail of the vehicle 1. The battery 2 may be used for supplying electricity to the vehicle 1, for example, the battery 2 may be used as an operating power source for the vehicle 1.

The vehicle 1 may further include a controller 3 and a motor 4, where the controller 3 is used for controlling the battery 2 to supply electricity to the motor 4 to be used for, for example, operating electricity requirements during start-up, navigation and running of the vehicle 1.

In some embodiments of the application, the battery 2 may not only serve as the operating power source for the vehicle 1, but also serve as a driving power source for the vehicle 1, so as to replace or partially replace fuel or natural gas to provide driving power for the vehicle 1.

Fig. 2 is an exploded view of a battery provided in some embodiments of the application. As shown in Fig. 2, the battery 2 includes a box 5 and a battery cell (not shown in Fig. 2), and the battery cell is accommodated in the box 5.

The box 5 is used for accommodating the battery cell and may be of various structures. In some embodiments, the box 5 may include a first box portion 51 and a second box portion 52, the first box portion 51 and the second box portion 52 may cover each other, and the first box portion 51 and the second box portion 52 define an accommodating space 53 for accommodating the battery cell together. The second box portion 52 may be of a hollow structure with an opening end, the first box portion 51 is of a plate-like structure, and the first box portion 51 covers an open side of the second box portion 52 so as to form the box 5 with the accommodating space 53. The first box portion 51 and the second box portion 52 may be both of hollow structures with open sides, and an open side of the first box portion 51 covers the open side of the second box portion 52 so as to form the box 5 with the accommodating space 53. Of course, the first box portion 51 and the second box portion 52 may be in various shapes, such as a cylinder or a cuboid.

In order to improve sealability after the first box portion 51 and the second box portion 52 are connected, a seal, such as a sealant or a seal ring, may be arranged between the first box portion 51 and the second box portion 52.

Assuming that the first box portion 51 covers a top portion of the second box portion 52, the first box portion 51 may also be referred to as an upper box cover, and the second box portion 52 may also be referred to as a lower box.

There may be one or more battery cells in the battery 2. If there are a plurality of battery cells, the plurality of battery cells may be connected in series, in parallel, or in a series-parallel manner. The plurality of battery cells may be directly connected in series, in parallel, or in a series-parallel manner, and then a whole formed by the plurality of battery cells is accommodated in the box 5. Of course, the plurality of battery cells may be connected in series, in parallel, or in a series-parallel manner first to form a battery module 6, and then a plurality of battery modules 6 are connected in series, in parallel, or in a series-parallel manner to form a whole to be accommodated in the box 5.

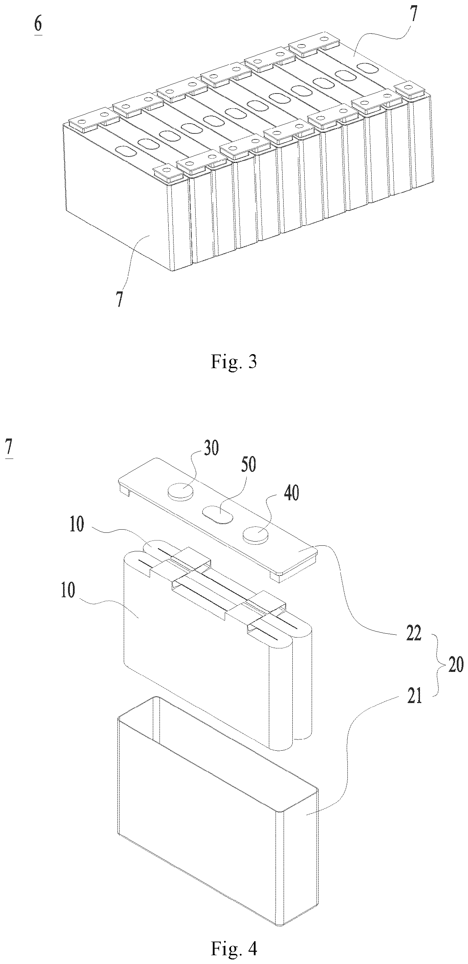

Fig. 3 is a schematic structural diagram of the battery module shown in Fig. 2. As shown in Fig. 3, in some embodiments, a plurality of battery cells 7 are provided, and the plurality of battery cells 7 are connected in series, in parallel or in parallel-series to form battery modules 6, then the plurality of battery modules 6 are connected in series, in parallel or in parallel-series to form a single unit, and are accommodated in the box.

The plurality of battery cells 7 in the battery module 6 may be electrically connected to each other by means of bus components, so as to be connected in series, in parallel, or in a series-parallel manner.

Fig. 4 is an exploded view of a battery cell provided in some embodiments of the application. As shown in Fig. 4, the battery cells 7 provided in the embodiment of the application include an electrode assembly 10 and a case 20, and the electrode assembly 10 is accommodated in the case 20.

In some embodiments, the case 20 may also be used for accommodating an electrolyte, such as an electrolytic solution. The case 20 may be of various structures.

In some embodiments, the case 20 may include a casing 21 and an end cover 22, the casing 21 is of a hollow structure with an open side, and the end cover 22 covers an opening of the casing 21 to form a sealed connection, so as to form a sealed space for accommodating the electrode assembly 10 and the electrolyte.

The casing 21 may be in various shapes, such as a cylinder or a cuboid. The shape of the casing 21 may be determined according to a specific shape of the electrode assembly 10. For example, if the electrode assembly 10 is of a cylindrical structure, a cylindrical casing may be selected and used. If the electrode assembly 10 is of a cuboid structure, a cuboid casing may be selected and used. Of course, the end cover 22 may also be of various structures, for example, the end cover 22 may be of a plate-like structure or a hollow structure with an opening end. Illustratively, in Fig. 4, the casing 21 is of a cuboid structure, the end cover 22 is of a plate-like structure, and the end cover 22 covers an opening at a top portion of the casing 21.

In some embodiments, the battery cell 7 may further include a positive electrode terminal 30, a negative terminal 40 and a pressure relief mechanism 50, all of which are arranged on the end cover 22. The positive terminal 30 and the negative terminal 40 are both used for being electrically connected to the electrode assembly 10, so as to output electrical energy generated by the electrode assembly 10. The pressure relief mechanism 50 is used for relieving a pressure inside the battery cell 7 when an internal pressure or temperature of the battery cell 7 reaches a predetermined value.

Illustratively, the pressure relief mechanism 50 is positioned between the positive electrode terminal 30 and the negative terminal 40 and may be components such as an explosion-proof valve, an explosion-proof sheet, an air valve, a pressure relief valve, or a safety valve.

Certainly, in some other embodiments, the case 20 may also have other structures. For example, the case 20 includes a casing 21 and two end covers 22, the casing 21 is a hollow structure with opposite sides open, and each of the end covers 22 covers an opening of the casing 21 correspondingly to form a sealed connection, so as to form a sealed space for accommodating the electrode assembly 10 and an electrolyte. In this structure, the positive electrode terminal 30 and the negative electrode terminal 40 may be arranged on the same end cover 22, or may be arranged on different end covers 22. The pressure relief mechanism 50 may be arranged on one end cover 22, or the pressure relief mechanisms 50 may be arranged on both of the end covers 22.

It should be noted that in the battery cell 7, there may be one or more electrode assemblies 10 accommodated in the case 20. Illustratively, in Fig. 4, there are two electrode assemblies 10.

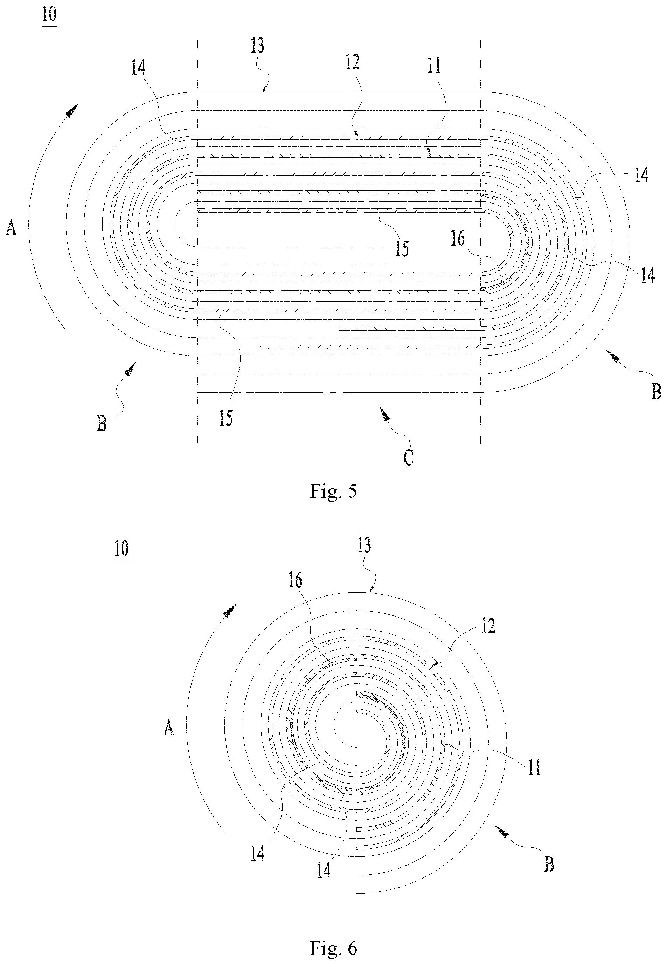

Fig. 5 is a schematic structural diagram of an electrode assembly provided in some embodiments of the application.

As shown in Fig. 5, the electrode assembly 10 in the embodiments of the application includes a positive pole piece 11 and a negative pole piece 12, the positive pole piece 11 and the negative pole piece 12 are wound in a winding direction A to form a winding structure.

In the embodiments of the application, the winding direction A is a direction in which the positive pole piece 11 and the negative pole piece 12 are wound circumferentially from the inside out. In Fig. 5, the winding direction A is clockwise.

In some embodiments, the electrode assembly 10 further includes a separator 13 for separating the positive pole piece 11 from the negative pole piece 12, so as to reduce the risk of short circuit between the positive pole piece 11 and the negative pole piece 12. The separator 13 has a large number of through micropores, which can ensure free passage of electrolyte ions and has good permeability to lithium ions. Therefore, the separator 13 can hardly block the passage of lithium ions. Exemplarily, the separator 13 may be made of polypropylene (PP) or polyethylene (PE).

The positive pole piece 11, the negative pole piece 12 and the separator 13 are strip structures. In the embodiments of the application, the positive pole piece 11, the separator 13 and the negative pole piece 12 are sequentially laminated and wound for more than two turns to form an electrode assembly 10.

The electrode assembly 10 may have various shapes, for example, the electrode assembly 10 may be a cylinder, a flat body, a prism (e.g., a triangular prism, a quadrangular prism or a hexagonal prism) or other shapes.

In some embodiments, the winding structure includes a bent region B. The positive pole piece 11 and the negative pole piece 12 each includes a plurality of bent portions 14 located in the bent region B. The bent region B is a region in which the electrode assembly 10 has a bent structure, and a part (i.e., the bent portions 14 of the positive pole piece 11), located in the bent region B, of the positive pole piece 11 and a part (i.e., the bent portions 14 of the negative pole piece 12), located in the bent region B, of the negative pole piece 12 are arranged in a bent manner. Exemplarily, the bent portions 14 of the positive pole piece 11 and the bent portions 14 of the negative pole piece 12 are substantially bent in an arc shape.

Exemplarily, in the bent region B, the bent portions 14 of the positive pole piece 11 and the bent portions 14 of the negative pole piece 12 are alternately arranged, i.e., in the bent region B, one bent portion 14 of the negative pole piece 12, one bent portion 14 of the positive pole piece 11, one bent portion 14 of the negative pole piece 12 ... are arranged sequentially. Optionally, one of the innermost bent portions 14 of the positive pole piece 11 is located outside one of the innermost bent portions 14 of the negative pole piece 12.

In some embodiments, the electrode assembly 10 is flat. Exemplarily, the winding structure further includes a straight region C connected to the bent region B. The positive pole piece 11 and the negative pole piece 12 each includes a plurality of straight portions 15 located in the straight region C. The straight region C is a region in which the electrode assembly 10 has a straight structure, and optionally, two bent regions B are provided and connected to both ends of the straight region C respectively.

A part (i.e., the straight portions 15 of the positive pole piece 11), located in the straight region C, of the positive pole piece 11 and a part (i.e., the straight portions 15 of the negative pole piece 12), located in the straight region C, of the negative pole piece 12 are arranged substantially straight. Surfaces of the straight portions 15 of the positive pole piece 11 and the straight portions 15 of the negative pole piece 12 are substantially flat.

Fig. 6 is a schematic structural diagram of an electrode assembly provided in some other embodiments of the application.

As shown in Fig. 6, in some embodiments, the electrode assembly 10 is substantially cylindrical. Exemplarily, the winding structure may have only the bent region B, but no straight region. In the positive pole piece 11, one turn of the positive pole piece 11 is a bent portion 14; and in the negative pole piece 12, one turn of the negative pole piece 12 is a bent portion 14.

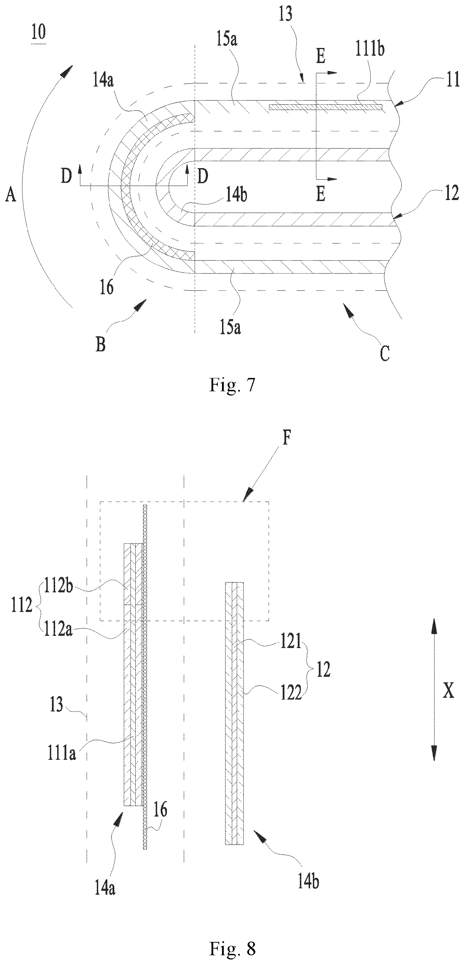

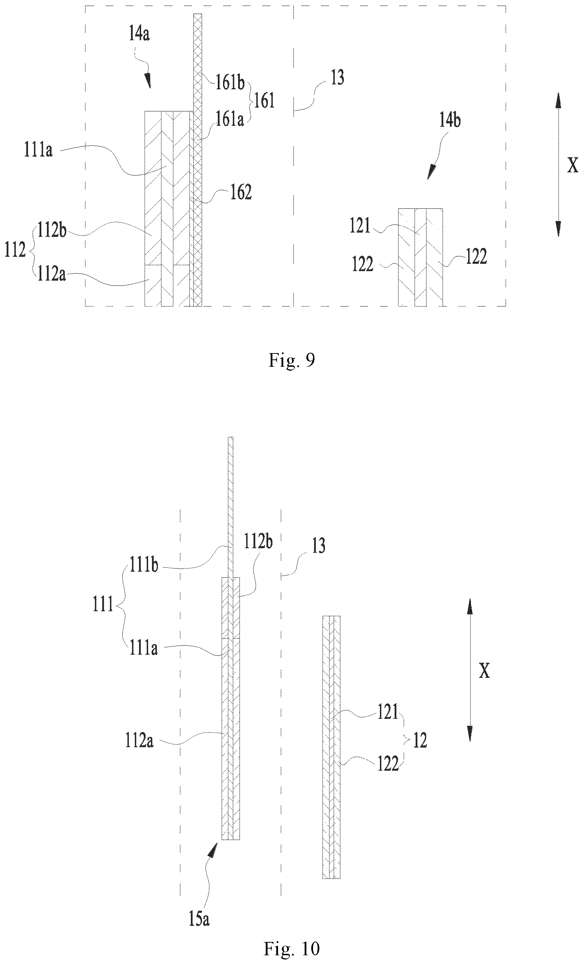

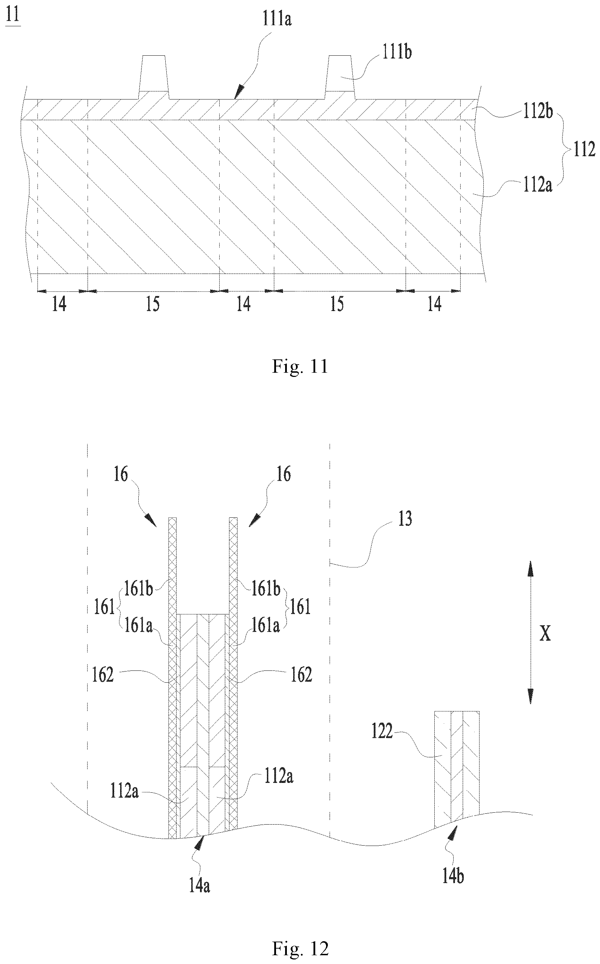

Fig. 7 is a local structural diagram of an electrode assembly provided in some embodiments of the application; Fig. 8 is a schematic sectional view of the electrode assembly shown in Fig. 7 taken along line D-D; Fig. 9 is an enlarged view of the electrode assembly shown in Fig. 8 at the square frame F; Fig. 10 is a schematic sectional view of the electrode assembly shown in Fig. 7 taken along line E-E; and Fig. 11 is a local structural diagram of a positive pole piece, in an unfolded state, of an electrode assembly provided in some embodiments of the application.

As shown in Fig. 7 to Fig. 11, the positive pole piece 11 includes a positive current collector 111 and a positive coating 112 coated on a surface of the positive current collector 111. The positive current collector 111 includes a positive current collecting portion 111a and a positive tab 111b protruding from the positive current collecting portion 111a; the positive coating 112 includes a positive active material layer 112a, both surfaces of the positive current collecting portion 111a are coated with the positive active material layer 112a, and the positive tab 111b is at least partially uncoated with the positive active material layer 112a. The part, not coated with the positive active material layer 112a, of the positive tab 111b is used for electrical connection to an electrode terminal.

In some embodiments, only part of the positive current collecting portion 111a is coated with the positive active material layer 112a, and the positive tab 111b is not coated with the positive active material layer 112a. The positive coating 112 further includes an insulating layer 112b located at one side, near the positive tab 111b, of the positive active material layer 112a, and the region, not coated with the positive active material layer 112a, of the positive current collecting portion 111a is coated with the insulating layer 112b. Exemplarily, the root, near the positive current collecting portion 111a, of the positive tab 111b is also coated with the insulating layer 112b.

In the bent portions of the positive pole piece 11, both ends of the positive coating 112 in a first direction X are flush with both ends of the positive current collecting portion 111a in the first direction X. The first direction X is perpendicular to the winding direction A.

In some embodiments, the positive tab 111b is connected to one end of the straight portion in the first direction X and protrudes from the straight portion. In the first direction X, both ends of the straight portions of the positive pole piece 11 are flush with both ends of the bent portions of the positive pole piece 11 respectively. In the positive pole piece 11, the positive tab 111b may be connected to some or all of the straight portions. Exemplarily, a plurality of positive tabs 111b are provided and laminated.

The negative pole piece 12 includes a negative current collector 121 and a negative coating coated on a surface of the negative current collector 121. The negative current collector 121 includes a negative current collecting portion and a negative tab protruding from the negative current collecting portion; the negative coating includes a negative active material layer 122, both surfaces of the negative current collecting portion are coated with the negative active material layer 122, and the negative tab is at least partially uncoated with the negative active material layer 122. The part, not coated with the negative active material layer 122, of the negative tab is used for electrical connection to an electrode terminal.

In the bent portions of the negative pole piece 12, both ends of the negative active material layer 122 in the first direction X are flush with both ends of the negative current collecting portion in the first direction X.

In the first direction X, both ends of the negative active material layer 122 go beyond the positive active material layer 112a. The first direction X is perpendicular to the winding direction A. In the first direction X, one end of the positive active material layer 112a is located at an inner side of one end of the negative active material layer 122, and the other end of the positive active material layer 112a is located at an inner side of the other end of the negative active material layer 122, such that the negative active material layer 122 can cover the positive active material layer 112a, thereby providing more lithium intercalation sites for lithium ions deintercalated from the positive active material layer 112a, and reducing the risk of lithium plating.

In some embodiments, at least one of the bent portions of the positive pole piece 11 is a first bent portion 14a, and at least one of the bent portions of the negative pole piece 12 is a second bent portion 14b adjacent to the first bent portion 14a. The electrode assembly 10 is provided with a first barrier 16, at least part of the first barrier 16 is located between the first bent portion 14a and the second bent portion 14b, and the first barrier 16 is configured to block at least part of ions deintercalated from the first bent portion 14a from being intercalated into the second bent portion 14b. In the first direction X, at least one end of the first barrier 16 goes beyond the first bent portion 14a and the second bent portion 14b.

In the first direction X, one end of the first barrier 16 goes beyond the first bent portion 14a and the second bent portion 14b, while the other end of the first barrier 16 may or may not go beyond the first bent portion 14a and the second bent portion 14b.

In the positive pole piece 11, there may be one or more first bent portions 14a. In the positive pole piece 11, some or all of the bent portions may be the first bent portions 14a. For example, in the positive pole piece 11, a part of the bent portions are the first bent portions 14a, and the other part of the bent portions are third bent portions. A first barrier 16 is arranged between the first bent portions 14a and the second bent portion 14b, while the first barrier 16 is not arranged between the third bent portions and bent portions of adjacent negative pole pieces 12 on both sides.

In the negative pole piece 12, there may be one or more second bent portions 14b. In the negative pole piece 12, some or all of the bent portions may be the second bent portions 14b. For example, in the negative pole piece 12, some of the bent portions are the second bent portions 14b, and the others of the bent portions are fourth bent portions. The first barriers 16 are arranged between the second bent portions 14b and the first bent portions 14a, while the first barriers 16 are not arranged between the fourth bent portions and bent portions of adjacent positive pole pieces 11 on both sides.

There may be one or more first barriers 16 between the first bent portions 14a and the second bent portions 14b. Between the first bent portions 14a and the second bent portions 14b, only the first barriers 16 may be provided, or other barriers may be provided at the same time, such as second barriers and third barriers.

All or part of the first barriers 16 may be located in the bent region B. For example, for an electrode assembly including a straight region C, all of the first barriers 16 may be located in the bent region B, or a part in the bent region B and the other part in the straight region C.

The first barriers 16 can be independently arranged on the positive pole piece 11 and the negative pole piece 12, or attached to any surface of the positive pole piece 11, any surface of the negative pole piece 12 or any surface of the separator 13. The first barriers 16 are independently arranged on the positive pole piece 11 and the negative pole piece 12, which means that the first barriers 16 are separately laminated with the positive pole piece 11 and the negative pole piece 12, i.e., no adhesion or coating relationship exists; and attachment refers to connection by means of adhesion, coating or spraying.

The second bent portion produces stress concentration during bent and may cause the negative active material to shed. Due to the shedding of the negative active material, lithium intercalation sites of the negative active material layer of the second bent portion may be less than the amount of lithium ions provided by the positive active material layer of the first bent portion, thus triggering lithium plating. The battery cell may be vibrated or squeezed during use; the negative active material layer of the second bent portion is in a bent state, and when the negative active material layer of the second bent portion is vibrated or squeezed, the negative active material is more likely to shed.

In the embodiments of the application, lithium plating can be effectively reduced by arranging the first barrier 16 between the first bent portion 14a and the second bent portion 14b. During charging, at least part of ions deintercalated from the positive active material layer 112a of the first bent portion 14a are blocked by the first barrier 16, such that ions blocked by the first barrier 16 cannot be intercalated into the negative active material layer 122 of the second bent portion 14b, which reduces the occurrence of lithium plating when the negative active material sheds from the second bent portion 14b. In other words, although lithium intercalation sites of the second bent portion 14b are reduced due to the shedding of the negative active material, the first barrier 16 blocks at least part of ions deintercalated from the positive active material layer 112a of the first bent portion 14a, thereby reducing the occurrence of lithium plating.

In the embodiments of the application, at least one end of the first barrier 16 in the first direction X goes beyond the first bent portion 14a and the second bent portion 14b, and a part, going beyond the first bent portion 14a and the second bent portion 14b, of the first barrier 16 can act as a support, which can effectively reduce vibration amplitude of the first bent portion 14a and the second bent portion 14b, reduce impact force on the first bent portion 14a and the second bent portion 14b, and reduce shedding of active materials, thereby reducing the occurrence of lithium plating and improving the safety performance of the battery cell.

In the embodiments of the application, the first barrier 16 can not only reduce the shedding of the positive active material of the first bent portion 14a and the shedding of the negative active material of the second bent portion 14b, but also block at least part of ions deintercalated from the positive active material layer 112a of the first bent portion 14a, thereby reducing the occurrence of lithium plating and improving the safety performance of the battery cell.

In some embodiments, in the first direction X, both ends of the first barrier 16 go beyond the first bent portion 14a.

One end of the first barrier 16 in the first direction X is located at a more outward side of one end of the first bent portion 14a in the first direction X, and the other end of the first barrier 16 in the first direction X is located at a more outward side of the other end of the first bent portion 14a in the first direction X.

In the first direction X, one end of the first barrier 16 goes beyond the second bent portion 14b, and the other end of the first barrier 16 may or may not go beyond the second bent portion 14b.

In the embodiments, both ends of the first barrier 16 in the first direction X can act as supports, thereby reducing vibration amplitude of the first bent portion 14a, reducing impact force on the first bent portion 14a, and reducing shedding of active materials.

In some embodiments, in the first direction X, both ends of the first barrier 16 go beyond the second bent portion 14b.

One end of the first barrier 16 in the first direction X is located at a more outward side of one end of the second bent portion 14b in the first direction X, and the other end of the first barrier 16 in the first direction X is located at a more outward side of the other end of the second bent portion 14b in the first direction X.

In the embodiments, both ends of the first barrier 16 in the first direction X can act as supports, which reduces vibration amplitude of the second bent portion 14b, reduces impact force on the second bent portion 14b, and reduces shedding of active materials, thereby reducing the occurrence of lithium plating and improving the safety performance of the battery cell.

In some embodiments, at least one of the innermost bent portions of the positive pole piece 11 is a first bent portion 14a, and at least one of the innermost bent portions of the negative pole piece 12 is a second bent portion 14b. In other words, the first barrier 16 is arranged between two innermost bent portions of the bent region B.

One of the innermost bent portions of the positive pole piece 11 is bent to the greatest extent, i.e., the shedding of the positive active material from one of the innermost bent portions of the positive pole piece 11 is the most serious; and one of the innermost bent portions of the negative pole piece 12 is bent to the greatest extent, i.e., the shedding of the negative active material from one of the innermost bent portions of the negative pole piece 12 is the most serious. In the embodiments of the application, at least one of the innermost bent portions of the positive pole piece 11 is set as the first bent portion 14a, and at least one of the innermost bent portions of the negative pole piece 12 is set as the second bent portion 14b, such that lithium plating between the two innermost bent portions of the bent region B can be reduced, thereby improving the safety performance.

In some embodiments, two or more bent portions of the negative pole piece 12 from the inside out are the first bent portions 14a, and two or more bent portions of the positive pole piece 11 from the inside out are the second bent portions 14b. The first bent portions 14a and the second bent portions 14b are arranged alternately from the inside out. The first barrier 16 is arranged between adjacent first bent portion 14a and second bent portion 14b.

In some embodiments, both ends of the first barrier 16 in the winding direction A are located in the bent region B; exemplarily, both ends of the first barrier 16 in the winding direction A are located at the junction of the bent region B and the straight region C, or both ends of the first barrier 16 in the winding direction A are adjacent to the junction of the bent region B and the straight region C. In some other embodiments, one end of the first barrier 16 in the winding direction A is located in the bent region B, and the other end of the first barrier 16 in the winding direction A is located in the straight region C. In some other embodiments, both ends of the first barrier 16 in the winding direction A are located in the straight region C.

In some embodiments, the positive pole piece 11 further includes a first straight portion 15a located in the straight region C and a positive tab 111b connected to the first straight portion 15a, the first straight portion 15a is connected to the first bent portion 14a, and the positive tab 111b is connected to one end of the first straight portion 15a in the first direction X. In the first direction X, one end, near the positive tab 111b, of the first barrier 16 goes beyond the first bent portion 14a and the second bent portion 14b.

Both ends of the first straight portion 15a in the first direction X are flush with both ends of the first bent portion 14a in the first direction X respectively, and the positive tab 111b protrudes from the first straight portion 15a.

When the electrode assembly 10 vibrates, the positive tab 111b is prone to tearing due to its thinness, which affects the current passing capacity. Since the end, near the positive tab 111b, of the first barrier 16 goes beyond the first bent portion 14a and the second bent portion 14b, the first barrier 16 can reduce vibration amplitude of the electrode assembly 10 on the positive tab 111b side, thereby reducing the risk of tearing the positive tab 111b.

In some embodiments, the electrode assembly 10 further includes a separator 13 for separating the first pole piece 11 from the second pole piece 12, in the first direction X, both ends of the separator 13 go beyond the first bent portion 14a and the second bent portion 14b.

One end of the separator 13 in the first direction X is located at a more outward side of one end of the first bent portion 14a in the first direction X and at a more outward side of one end the second bent portion 14b in the first direction X; the other end of the separator 13 in the first direction X is located at a more outward side of the other end of the first bent portion 14a in the first direction X and at a more outward side of the other end of the second bent portion 14b in the first direction X.

In the embodiments, the separator 13 can separate the first bent portion 14a from the second bent portion 14b, thereby reducing the risk of electrically connecting the first bent portion 14a with the second bent portion 14b, and improving the safety performance.

In some embodiments, the porosity of the first barrier 16 is lower than that of the separator 13.

In the embodiments of the application, the porosity of the first barrier 16 is lower than that of the separator 13, making the first barrier 16 more effective in blocking the passage of lithium ions. Porosity is the percentage of pore volume in a bulk material to the total volume of the material in its natural state. In general, the porosity is tested by true density.

Exemplarily, the porosity of the first barrier 16 is 10%-70%, and optionally, the porosity of the first barrier 16 is 20%-60%.

In some embodiments, the hardness of the first barrier 16 is higher than that of the separator 13.

With a relatively high hardness, the first barrier 16 can withstand a large impact force, and reduce deformation of the first barrier 16 under an impact force, thereby effectively reducing vibration amplitude of the first bent portion 14a and the second bent portion 14b, reducing the impact force on the first bent portion 14a and the second bent portion 14b, and reducing shedding of active materials. Exemplarily, the Shore hardness of the first barrier 16 is higher than that of the separator 13.

The first barrier 16, which has a relatively high hardness, can also support the separator 13, thereby reducing the risk that ends of the separator 13 are folded over between the first bent portion 14a and the second bent portion 14b.

In the first direction X, one end of the separator 13 may or may not go beyond the first barrier 16, and the other end of the separator 13 may or may not go beyond the first barrier 16.

In some embodiments, in the first direction X, both ends of the separator 13 go beyond the first barrier 16.

One end of the separator 13 in the first direction X is located at a more outward side of one end of the first barrier 16 in the first direction X, and the other end of the separator 13 in the first direction X is located at a more outward side of the other end of the first barrier 16 in the first direction X.

In the embodiments, the first barrier 16 will not increase the maximum size of the electrode assembly 10 in the first direction X, improving the energy density of the electrode assembly 10.

In some embodiments, the first barrier is attached to a surface of the separator 13.

In some embodiments, the first barrier 16 is attached to the first bent portion 14a. Exemplarily, the first barrier 16 may be attached to a surface of the first bent portion 14a by means of adhesion.

In some embodiments, the first barrier 16 may be made of at least one of an inorganic oxide and a high molecular polymer. Exemplarily, the inorganic oxide may be at least one of magnesium oxide (MgO), calcium oxide (CaO), boehmite, wollastonite, barium sulfate (BaSO₄), calcium sulfate (CaSO₄), calcium carbonate (CaCO₃), aluminum oxide (Al₂O₃) and silicon dioxide (SiO₂); and the high molecular polymer may be at least one of polypropylene, polyvinyl chloride, polyethylene, epoxy resin, polyacrylate and polyurethane rubber.

In some other embodiments, the first barrier 16 includes a first base layer 161 and a first adhesive layer 162, the first adhesive layer 162 is disposed on a surface, facing the first bent portion 14a, of the first base layer 161. The first base layer 161 includes a first body portion 161a and a first supporting portion 161b connected to the first body portion 161a, the first adhesive layer 162 is configured to bond at least part of the first body portion 161a to the first bent portion 14a, and the first supporting portion 161b protrudes from the first bent portion 14a in the first direction X.

The first base layer 161 may be made of polyethylene and/or ethylene vinyl acetate copolymer (EVA).

The first body portion 161a is a portion of the first base layer 161 that overlaps with the first bent portion 14a in a thickness direction of the first bent portion 14a. Accordingly, the first supporting portion 161b does not overlap with the first bent portion 14a in the thickness direction of the first bent portion 14a. The first body portion 161a is configured to block at least part of ions deintercalated from the positive active material layer 112a of the first bent portion 14a, thereby reducing the occurrence of lithium plating. The first supporting portion 161b acts as a support, which can effectively reduce vibration amplitude of the first bent portion 14a and the second bent portion 14b, reduce impact force on the first bent portion 14a and the second bent portion 14b, and reduce shedding of active materials, thereby reducing the occurrence of lithium plating and improving the safety performance of the battery cell.

In some embodiments, the first body portion 161a is integrally bonded to the first bent portion 14a through the first adhesive layer 162. In some other embodiments, a part of the first body portion 161a is bonded to the first bent portion 14a through the first adhesive layer 162, and a part of the first body portion 161a is not provided with the first adhesive layer 162 and is not bonded to the first bent portion 14a.

In some embodiments, at least part of a surface, facing the first bent portion 14a, of the first supporting portion 161b is not provided with the first adhesive layer 162. The first supporting portion 161b protrudes from the first bent portion 14a and does not need to be bonded to the first bent portion 14a, such that the first adhesive layer 162 on the surface of the first supporting portion 161b can be omitted, which can save materials and improve energy density. In the embodiments, the possibility that the first supporting portion 161b is bonded to the separator 13 can be reduced, and the risk that the separator 13 wrinkles under the influence of the first supporting portion 161b can be reduced.

Fig. 12 is a local sectional view of an electrode assembly provided in some other embodiments of the application.

As shown in Fig. 12, in some embodiments, the first barrier 16 is attached to two surfaces of the first bent portion 14a. Exemplarily, at least two first barriers 16 are attached to the first bent portion 14a, the first body portions 161a of the two first barriers 16 are arranged at both sides of the first bent portion 14a respectively, and the first supporting portions 161b of the two first barriers 16 are not provided with the first adhesive layer 162. The first body portions 161a of the two first barriers 16 are bonded to the two surfaces of the first bent portion 14a respectively.

The first body portions 161a of the two first barriers 16 are configured to block at least part of ions deintercalated from the positive active material layer 112a on both sides of the first bent portion 14a. The first supporting portions 161b of the two first barriers 16 can protect the first bent portion 14a from both sides, thereby reducing impact force on the first bent portion 14a.

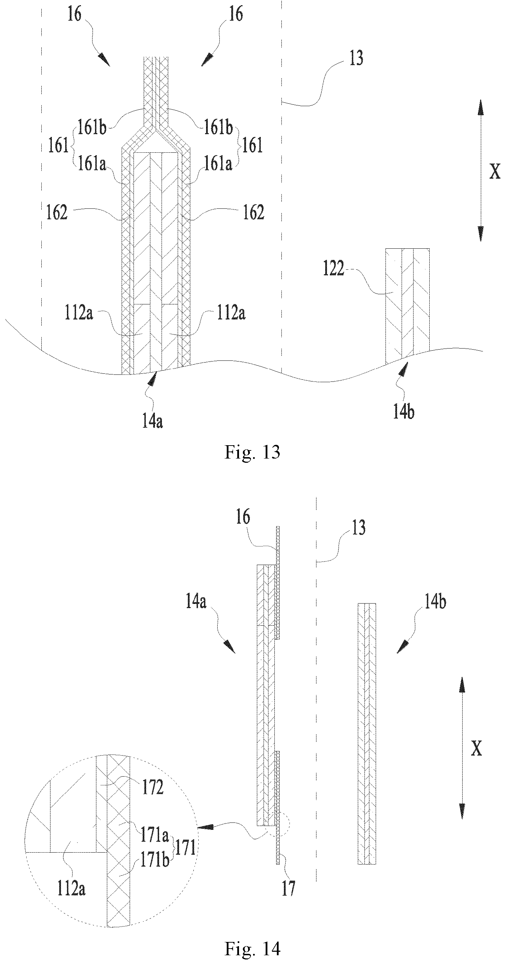

Fig. 13 is a local sectional view of an electrode assembly provided in some other embodiments of the application.

As shown in Fig. 13, in some embodiments, at least part of a surface, facing the first bent portion 14a, of the first supporting portion 161b is provided with the first adhesive layer 162. The first adhesive layer 162 may bond the first supporting portion 161b to a set member as required.

In some embodiments, the first supporting portion 161b can be bent and bonded to one end of the first bent portion 14a in the first direction X, which can increase the bonding area between the first barrier 16 and the first bent portion 14a and reduce the risk that the first barrier 16 sheds from the first bent portion 14a.

In some embodiments, the first barrier 16 is attached to two surfaces of the first bent portion 14a, the first body portions 161a of the two first barriers 16 are arranged at both sides of the first bent portion 14a respectively, and the first supporting portions 161b of the two first barriers 16 are connected by the first adhesive layer 162.

The first body portions 161a of the two first barriers 16 are bonded to the two surfaces of the first bent portion 14a.

Before the two first barriers 16 are bonded to the first bent portion 14a, the first supporting portion 161b of one first barrier 16 is provided with the first adhesive layer 162, and the first supporting portion 161b of the other first barrier 16 is not provided with the first adhesive layer 162. After the two first barriers 16 are bonded to the first bent portion 14a, the two first supporting portions 161b are pressed together and connected by a first adhesive layer 162. In some other examples, before the two first barriers 16 are bonded to the first bent portion 14a, the first supporting portions 161b of the two first barriers 16 are provided with the first adhesive layers 162. After the two first barriers 16 are bonded to the first bent portion 14a, the two first supporting portions 161b are pressed together, and the two first adhesive layers 162 are bonded together to connect the two first supporting portions 161b. The first supporting portions 161b of the two first barriers 16 are connected by the first adhesive layer 162, such that the two first barriers 16 adhere to each other, thereby reducing the risk that the first barriers 16 shed from the first bent portion 14a, and improving the reliability of the first barriers 16 during the service life of the battery cell.

Fig. 14 is a local sectional view of an electrode assembly provided in some other embodiments of the application.

In some embodiments, the electrode assembly 10 is further provided with a second barrier 17, at least part of the second barrier 17 is located between the first bent portion 14a and the second bent portion 14b. The first barrier 16 and the second barrier 17 are spaced in the first direction X. One end, away from the second barrier 17, of the first barrier 16 goes beyond one end of the first bent portion 14a, and the other end, away from the first barrier 16, of the second barrier 17 goes beyond the other end of the first bent portion 14a.

The first barrier 16 and the second barrier 17 are configured to block at least part of ions deintercalated from the first bent portion 14a from being intercalated into the second bent portion 14b.

The part, going beyond the first bent portion 14a, of the first barrier 16 can act as a support, thereby reducing impact force on one end of the first bent portion 14a during vibration and reducing shedding of active materials; and the part, going beyond the first bent portion 14a, of the second barrier 17 can act as a support, thereby reducing impact force on the other end of the first bent portion 14a during vibration and reducing shedding of active materials.

In some embodiments, the second barrier 17 is attached to the first bent portion 14a. The second barrier 17 has the same structure as the first barrier 16. Exemplarily, the second barrier 17 includes a second base layer 171 and a second adhesive layer 172. The second adhesive layer 172 is disposed on a surface, facing the first bent portion 14a, of the second base layer 171.

The second base layer 171 includes a second body portion 171a and a second supporting portion 171b connected to the second body portion 171a. The second adhesive layer 172 is configured to bond at least part of the second body portion 171a to the first bent portion 14a, and the second supporting portion 171b protrudes from the first bent portion 14a in the first direction X. The second body portion 171a overlaps the first bent portion 14a in a thickness direction of the first bent portion 14a. The second body portion 171a is configured to block at least part of ions deintercalated from the positive active material layer 112a of the first bent portion 14a, thereby reducing the occurrence of lithium plating. The second supporting portion 171b acts as a support, which can effectively reduce vibration amplitude of the first bent portion 14a, reduce impact force on the first bent portion 14a, and reduce shedding of active materials.

In some embodiments, the second body portion 171a is integrally bonded to the first bent portion 14a through the second adhesive layer 172.

In some embodiments, at least part of the surface, facing the first bent portion 14a, of the second supporting portion 171b is not provided with the second adhesive layer 172. In some other embodiments, the surface, facing the first bent portion 14a, of the second supporting portion 171b may also be provided with the second adhesive layer 172.

In some embodiments, the electrode assembly 10 is further provided with a third barrier (not shown) attached to the first bent portion 14a and located between the first barrier 16 and the second barrier 17.

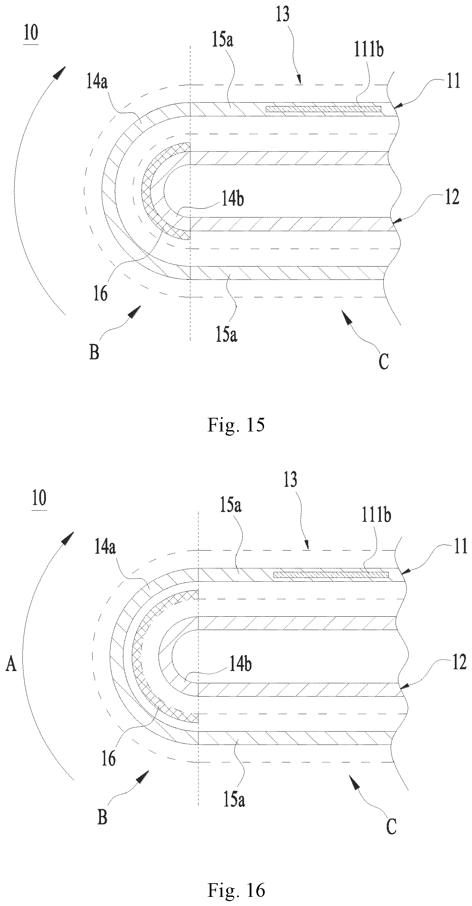

Fig. 15 is a local structural diagram of an electrode assembly provided in some other embodiments of the application.

As shown in Fig. 15, in some embodiments, the first barrier 16 is attached to a surface of the second bent portion 14b. Exemplarily, the first body portion of the first barrier 16 is bonded to the surface of the second bent portion 14b.

In some other embodiments, the first barrier 16 is attached to the surface of the first bent portion 14a and the surface of the second bent portion 14b.

Fig. 16 is a local structural diagram of an electrode assembly provided in some other embodiments of the application.

In some embodiments, the first barrier 16 is attached to a surface of the separator 13. Exemplarily, the first barrier 16 is integrally bonded to the surface of the separator 13.

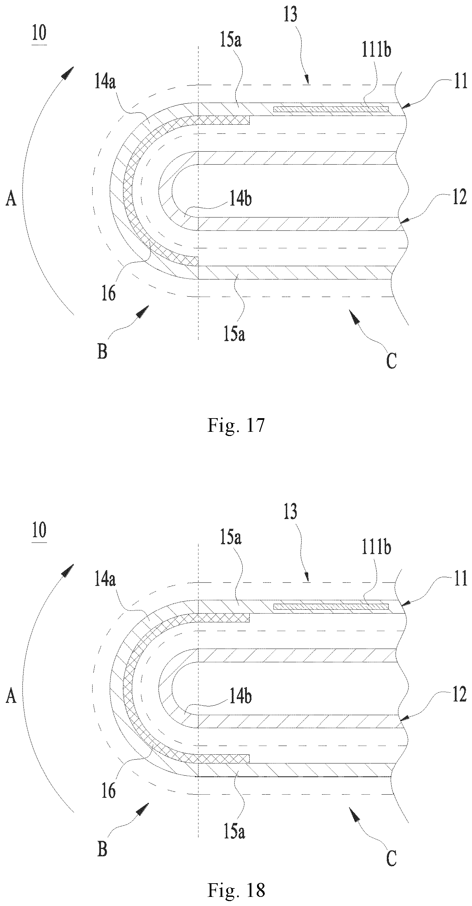

Fig. 17 is a local structural diagram of an electrode assembly provided in some other embodiments of the application.

As shown in Fig. 17, one end of the first barrier 16 in the winding direction A is located in the bent region B, and the other end of the first barrier 16 in the winding direction A is located in the straight region C. Exemplarily, one end of the first barrier 16 in the winding direction A is adjacent to the junction of the bent region B and the straight region C.

Exemplarily, the first barrier 16 is attached to both the first bent portion 14a and the first straight portion 15a.

Fig. 18 is a local structural diagram of an electrode assembly provided in some other embodiments of the application.

As shown in Fig. 18, both ends of the first barrier 16 in the winding direction A are located in the straight region C. Exemplarily, the first barrier 16 is attached to both the first bent portion 14a and the first straight portion 15a.

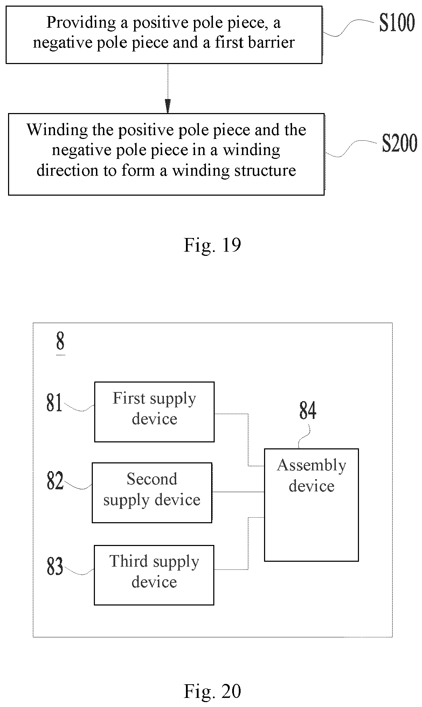

Fig. 19 is a schematic flow chart of a method for manufacturing an electrode assembly provided in some embodiments of the application.

As shown in Fig. 19, the method for manufacturing the electrode assembly in the embodiments of the application includes:
S100. providing a positive pole piece, a negative pole piece and a first barrier; and
S200. winding the positive pole piece and the negative pole piece in a winding direction to form a winding structure.

The winding structure includes a bent region. The positive pole piece and the negative pole piece each includes a plurality of bent portions located in the bent region, at least one of the bent portions in the positive pole piece is a first bent portion and at least one of the bent portions in the negative pole piece is a second bent portion adjacent to the first bent portion. At least part of the first barrier is located between the first bent portion and the second bent portion, and the first barrier is configured to block at least part of ions deintercalated from the first bent portion from being intercalated into the second bent portion. In a first direction, at least one end of the first barrier goes beyond the first bent portion and the second bent portion, and the first direction is perpendicular to the winding direction.

The step S100 includes: S110. providing a positive pole piece; S120. providing a negative pole piece; and S130. providing a first barrier.

It should be noted that for related structures of the electrode assembly manufactured by the above manufacturing method, it may refer to the electrode assembly provided in the above embodiments.

When the electrode assembly is assembled on the basis of the above-described manufacturing method for the electrode assembly, it is not necessary to perform the above-described steps sequentially, that is, the steps may be performed in the order mentioned in the embodiments, may be performed in a different order from that mentioned in the embodiments, or may be performed simultaneously. For example, step S110 and step S120 may be performed in any sequence, or performed simultaneously.

Fig. 20 is a schematic block diagram of a system for manufacturing an electrode assembly provided in some embodiments of the application.

As shown in Fig. 20, the system 8 for manufacturing the electrode assembly in the embodiments of the application includes: a first supply device 81, configured to supply a positive pole piece; a second supply device 82, configured to supply a negative pole piece; a third supply device 83, configured to supply a first barrier; and an assembly device 84, configured to wind the positive pole piece and the negative pole piece in a winding direction to form a winding structure.

The winding structure includes a bent region. The positive pole piece and the negative pole piece each includes a plurality of bent portions located in the bent region, at least one of the bent portions in the positive pole piece is a first bent portion and at least one of the bent portions in the negative pole piece is a second bent portion adjacent to the first bent portion. At least part of the first barrier is located between the first bent portion and the second bent portion, and the first barrier is configured to block at least part of ions deintercalated from the first bent portion from being intercalated into the second bent portion. In a first direction, at least one end of the first barrier goes beyond the first bent portion and the second bent portion, and the first direction is perpendicular to the winding direction.

For related structures of the electrode assembly manufactured by the above manufacturing system, it may refer to the electrode assembly provided in the above embodiments.

It should be noted that the embodiments in the application and features in the embodiments may be combined with one another if there is no conflict.

Finally, it should be noted that the above embodiments are merely used to describe the technical solution of the application, rather than limiting the same. Although the application has been described in detail with reference to the foregoing embodiments, those skilled in the art should understand that the technical solution described in the foregoing embodiments may still be modified, or some of the technical features therein may be equivalently replaced. However, these modifications or substitutions do not make the essence of the corresponding technical solutions deviate from the spirit and scope of the technical solutions of each embodiment of the application.

## Claims

1. An electrode assembly, comprising a positive pole piece and a negative pole piece, the positive pole piece and the negative pole piece being wound in a winding direction to form a winding structure comprising a bent region;
the positive pole piece and the negative pole piece each comprising a plurality of bent portions located in the bent region, at least one of the bent portions in the positive pole piece being a first bent portion, and at least one of the bent portions in the negative pole piece being a second bent portion adjacent to the first bent portion;
the electrode assembly being provided with a first barrier, at least part of the first barrier being located between the first bent portion and the second bent portion, and the first barrier being configured to block at least some ions deintercalated from the first bent portion from being intercalated into the second bent portion;
in a first direction, at least one end of the first barrier going beyond the first bent portion and the second bent portion, and the first direction being perpendicular to the winding direction.

2. The electrode assembly according to claim 1, wherein the first barrier is attached to the first bent portion.

3. The electrode assembly according to claim 2, wherein the first barrier comprises a first base layer and a first adhesive layer, the first adhesive layer being disposed on a surface, facing the first bent portion, of the first base layer;
the first base layer comprising a first body portion and a first supporting portion connected to the first body portion, the first adhesive layer being configured to bond at least part of the first body portion to the first bent portion, and the first supporting portion protruding from the first bent portion in the first direction.

4. The electrode assembly according to claim 3, wherein at least part of a surface, facing the first bent portion, of the first supporting portion is not provided with the first adhesive layer.

5. The electrode assembly according to claim 4, wherein the first barrier is attached to two surfaces of the first bent portion, the first body portions of the two first barriers are arranged at both sides of the first bent portion respectively, and the first supporting portions of the two first barriers are not provided with the first adhesive layer.

6. The electrode assembly according to claim 3, wherein at least part of the surface, facing the first bent portion, of the first supporting portion is provided with the first adhesive layer.

7. The electrode assembly according to claim 6, wherein the first barrier is attached to two surfaces of the first bent portion, the first body portions of the two first barriers are arranged at both sides of the first bent portion respectively, and the first supporting portions of the two first barriers are connected by the first adhesive layer.

8. The electrode assembly according to any one of claims 1 to 7, wherein in the first direction, both ends of the first barrier go beyond the first bent portion.

9. The electrode assembly according to claim 8, wherein in the first direction, both ends of the first barrier go beyond the second bent portion.

10. The electrode assembly according to any one of claims 1 to 7, wherein the electrode assembly is further provided with a second barrier, at least part of the second barrier being located between the first bent portion and the second bent portion;
the first barrier and the second barrier being spaced in the first direction, with one end, away from the second barrier, of the first barrier going beyond one end of the first bent portion, and one end, away from the first barrier, of the second barrier going beyond the other end of the first bent portion.

11. The electrode assembly according to any one of claims 1 to 10, wherein the electrode assembly further comprises a separator for separating the first pole piece from the second pole piece, in the first direction, both ends of the separator going beyond the first bent portion and the second bent portion.

12. The electrode assembly according to claim 11, wherein the porosity of the first barrier is lower than that of the separator.

13. The electrode assembly according to claim 11 or 12, wherein the hardness of the first barrier is higher than that of the separator.

14. The electrode assembly according to any one of claims 11 to 13, wherein in the first direction, both ends of the separator go beyond the first barrier.

15. The electrode assembly according to any one of claims 11 to 14, wherein the first barrier is attached to a surface of the separator.

16. The electrode assembly according to any one of claims 1 to 15, wherein the winding structure further comprises a straight region connected to the bent region;
both ends of the first barrier in the winding direction being located in the bent region; or one end of the first barrier in the winding direction being located in the bent region, and the other end of the first barrier in the winding direction being located in the straight region; or both ends of the first barrier in the winding direction being located in the straight region.

17. The electrode assembly according to claim 16, wherein the positive pole piece further comprises a first straight portion located in the straight region and a positive tab connected to the first straight portion, the first straight portion being connected to the first bent portion, and the positive tab being connected to one end of the first straight portion in the first direction;
in the first direction, one end, near the positive tab, of the first barrier going beyond the first bent portion and the second bent portion.

18. The electrode assembly according to any one of claims 1 to 17, wherein at least one of the innermost bent portions of the positive pole piece is the first bent portion, and at least one of the innermost bent portions of the negative pole piece is the second bent portion.

19. A battery cell, comprising a case and the electrode assembly according to any one of claims 1 to 18, wherein the electrode assembly is accommodated in the case.

20. A battery, comprising a box and the battery cell according to claim 19, wherein the battery cell is accommodated in the box.

21. An electric device, comprising the battery according to claim 20, the battery being configured to provide electrical energy.

22. A method for manufacturing an electrode assembly, comprising:
providing a positive pole piece, a negative pole piece and a first barrier; and
winding the positive pole piece and the negative pole piece in a winding direction to form a winding structure;
wherein the winding structure comprises a bent region;
the positive pole piece and the negative pole piece each comprising a plurality of bent portions located in the bent region, at least one of the bent portions in the positive pole piece being a first bent portion and at least one of the bent portions in the negative pole piece being a second bent portion adjacent to the first bent portion;
at least part of the first barrier being located between the first bent portion and the second bent portion, and the first barrier being configured to block at least part of ions deintercalated from the first bent portion from being intercalated into the second bent portion;
in a first direction, at least one end of the first barrier going beyond the first bent portion and the second bent portion, and the first direction being perpendicular to the winding direction.

23. A system for manufacturing an electrode assembly, comprising:
a first supply device for supplying a positive pole piece;
a second supply device for supplying a negative pole piece; and
a third supply device, configured to supply a first barrier; and
an assembly device, configured to wind the positive pole piece and the negative pole piece in a winding direction to form a winding structure;
wherein the winding structure comprises a bent region;
the positive pole piece and the negative pole piece each comprising a plurality of bent portions located in the bent region, at least one of the bent portions in the positive pole piece being a first bent portion and at least one of the bent portions in the negative pole piece being a second bent portion adjacent to the first bent portion;
at least part of the first barrier being located between the first bent portion and the second bent portion, and the first barrier being configured to block at least part of ions deintercalated from the first bent portion from being intercalated into the second bent portion;
in a first direction, at least one end of the first barrier going beyond the first bent portion and the second bent portion, and the first direction being perpendicular to the winding direction.
